# EUROPÄISCHE PATENTSCHRIFT

(11) **EP 2 623 764 B1**
(45) Veröffentlichungstag und Bekanntmachung des Hinweises auf die Patenterteilung: **25.02.2015**
(21) Anmeldenummer: 12196864.8
(22) Anmeldetag: 13.12.2012
(51) Int. Cl.: F02M 25/07, F16K 11/085, F16K 11/052

(54) **Abgaswegeventil**
Directional exhaust gas valve
Distributeur de gaz d'échappement

(30) Priorität: 31.01.2012 DE 102012100769
(43) Veröffentlichungstag der Anmeldung: 07.08.2013
(73) Patentinhaber: Benteler Automobiltechnik GmbH, 33104 Paderborn (DE)
(72) Erfinder: van den Eijkel, Pieter, 52146 Würselen (DE); Jans, Leo, 5708HN Helmond (NL)
(74) Vertreter: Griepenstroh, Jörg

(56) Entgegenhaltungen:
- EP-A2- 1 273 786
- WO-A1-2010/034450
- DE-A1-102007 048 300
- DE-A1-102008 006 049
- FR-A1- 2 923 886

## Beschreibung

Die Erfindung betrifft ein Abgaswegeventil zur umschaltbaren Durchleitung eines Abgases gemäß den Merkmalen im Oberbegriff von Patentanspruch 1.

Der Durchfluss eines Abgases innerhalb eines Abgassystems wird mittels Klappen geregelt. Diese Regelung findet durch eine rotatorische oder translatorische Bewegung der einzelnen Klappe statt, wodurch der Öffnungsquerschnitt der jeweiligen Rohrleitung beeinflusst wird. Knotenpunkte innerhalb des Abgassystems dienen als Bypass dazu, den anstehenden Abgasstrom auf wenigstens zwei weiterführende Rohrleitungen zu verteilen oder an nur eine dieser Rohrleitungen durchzuleiten.

Die entlang des Abgassystems auftretenden Temperaturen variieren mitunter stark in Abhängigkeit von der Entfernung zum Brennraum. Dies hat direkten Einfluss auf die Ausgestaltung der erforderlichen Regelungselemente, welche neben dem Gasdruck auch den auftretenden sowie wechselnden thermischen Belastungen standhalten müssen.

Insbesondere im Bereich der zur Stickoxidreduzierung eingesetzten Abgasrückführung (AGR) bei Kraftfahrzeugen sehen die Anforderungen vor, dass diese Regelungselemente möglichst nah im Bereich des Verbrennungsmotors angeordnet sind. Die hierbei als Bypass ausgeführten Regelungselemente sind somit Temperaturen bis 950 °C ausgesetzt. Neben der thermischen Belastung führen weitere Anforderungen in Bezug auf die Dichtigkeit und Leichtgängigkeit sowie Akustik und nicht zuletzt die Lebensdauer zu erschwerten Randbedingungen.

Für den Aufbau von Regelungselementen ist eine Vielzahl unterschiedlicher Ausgestaltungen bekannt. Einfache Drosselklappen sind beispielsweise an einer den Rohrquerschnitt durchstoßenden Drehachse gelagert. Sie zeichnen sich durch ein ausgeglichenes Kräftegleichgewicht aus, wodurch ein Verklemmen nahezu ausgeschlossen ist. Aufgrund der geringen Stell- und Haltekräfte werden kurze Stellzeiten für die Regelung erzielt. Als weitere positive Eigenschaft sind überdies geringe Strömungsgeräusche zu nennen.

Aufgrund der hohen Dichtigkeitsanforderungen werden im AGR-Bereich allerdings keine Drosselklappen verwendet. Um diese zu erfüllen, werden bevorzugt translatorisch verlagerbare Ventilklappen oder rotatorisch bewegliche Drehschieber eingesetzt.

Die Betätigung von Regelungselementen, näherhin der darin angeordneten Klappen, erfolgt über geeignete Antriebe, deren Funktionsweise elektrisch, pneumatisch oder hydraulisch erfolgt.

Zur Realisierung eines solchen Bypass werden innerhalb des Abgassystems angeordnete Abgaswegeventile eingesetzt, welche sinngemäß wenigstens drei in einem Knotenpunkt zusammentreffende Rohrleitungen zusammenführen. Hierbei ist auf ein ausgeglichenes Kräftegleichgewicht in Bezug auf die Achse der eingesetzten Klappen zu achten.

Die EP 1 509 692 B1 offenbart ein Abgaswegeventil zur umschaltbaren Weiterleitung eines Abgases. Dieses umfasst ein Gehäuse und ein darin angeordnetes bewegliches Regelelement. Das Gehäuse weist eine Eingangsöffnung sowie zwei Ausgangsöffnungen auf, zwischen denen der Abgasstrom durch Umschalten des Regelelements wahlweise durchleitbar ist. Zum Umschalten wird das Regelelement entweder rotatorisch oder translatorisch bewegt.

Aufgrund der Ausgestaltung werden einzelne Bereiche mitunter starken Kräften und Spannungen ausgesetzt, welche sowohl aus thermischen als auch aus strömungstechnischen Belastungen resultieren.

Die bei Abgasanlagen eingesetzten Regelungselemente bedürfen höherer Stellsowie Haltekräfte, um die erforderliche Bewegung zur Umschaltung des Abgasstroms zu realisieren. Demgegenüber sind im AGR-Bereich aufgrund des deutlich geringeren Massenstroms geringere Kräfte notwendig, gleichwohl erhöhen sich hier die Anforderungen an die Dichtheit.

Aus der FR 2 923 886 A1 ist ein Ventil zur umschaltbaren Durchgleitung eines Abgases bekannt, welches ein Gehäuse sowie ein darin angeordnetes Drehelement aufweist. Zudem sind an dem Gehäuse drei Öffnungen angeordnet, welche mit Hilfe des Drehelementes zur Durchleitung eines Mediums verbindbar sind, wobei jeweils zwei dieser Öffnungen einen Kanal ausbilden. Die verbleibende Öffnung wird durch eine Stellbewegung des Drehelementes zumindest bereichsweise verschlossen. Das Drehelement selbst ist hierzu in Form eines einseitig geschlossenen Hohlzylinders ausgebildet, wobei das geschlossene Ende eine im Querschnitt bogenförmige Rückwand aufweist. Weiterhin ist in einer Mantelfläche des Drehelements eine Aussparung angeordnet, welche mit der Öffnung des Gehäuses in Deckung bringbar ist. Zur Abdichtung innerhalb des Gehäuses sowie des in dem Gehäuse rotierbar gelagerten Drehelementes ist eine separate Dichtungsanordnung vorgesehen, welche zwei zueinander beabstandete offene Ringe und zwei diese Ringe verbindende Arme umfasst. Die Dichtungsanordnung wird durch Längsnuten und ringförmige Nuten umfangsseitig gekoppelt.

Weiterhin ist aus der EP 1 273 786 A2 eine Umschalteinrichtung zur Abgasrückführung bei einer Brennkraftmaschine bekannt, welche einen Abgaseinlassbereich sowie zwei Abgasauslassbereiche durch eine Drehbewegung miteinander verbindet. Die Verbindung wird hierbei über ein bewegliches Umschaltelement realisiert, welches unter Ausbildung eines Kanals den Abgaseinlassbereich mit wenigstens einem der Abgasauslassbereiche verbindet. Der jeweils andere Abgasauslassbereich ist gegenüber dem Abgaseinlassbereich hierbei zumindest bereichsweise verschlossen. Das für die Umschaltung vorgesehene Umschaltelement ist in Form eines einstückig geschlossenen Hohlzylinders ausgebildet, wobei sich in der Mantelfläche eine Abgasaustrittsöffnung sowie eine seiner stirnseitigen Abgaseintrittsöffnung gegenüberliege Rückwand befindet, welche einen im Querschnitt bogenförmigen Verlauf aufweist. Der auszubildende Kanal erstreckt sich dabei zwischen der Abgaseintrittsöffnung und der Abgasaustrittsöffnung des Umschaltelementes.

Weiterhin zeigt die DE 10 2007 048 300 A1 eine alternative Ausgestaltung eines Drehschieberventils für ein Abgasrückführungssystem. Das Drehschieberventil besteht hierbei aus einem Gehäuse, welches drei Öffnungen beinhaltet. Durch eine der Öffnungen strömt das Abgas der Verbrennungskraftmaschine in das Drehschieberventil ein und wird durch die drehbare Verlagerung eines hohlzylindrischen Körpers, welcher den eigentlichen Ventilkörper ausbildet, gezielt zu einer Kühlervorrichtung geleitet. Weiterhin ist das Drehschieberventil auch in der Lage, einen Teil des einfließenden Abgases derart umzuleiten, dass ein Bypass ausgebildet wird, der dazu dient, einen gewissen Teil des einströmenden Abgases direkt in die Verbrennungskraftmaschine zurückzuführen und so den Verbrennungsprozess gezielt zu beeinflussen.

Durch die WO 2010/034450 A1 wird eine weitere Möglichkeit zur Abgasumlenkung aufgezeigt, wobei das Abgasventil zur Steuerung des Abgasvolumenstromes dient, welcher zur Verbrennungskraftmaschine zurückgeführt werden soll. Hierzu ist das Ventil aus einem Gehäuse, einer Abgaseinlassöffnung, zwei Abgasauslassöffnungen sowie einer drehbar gelagerten Klappe ausgebildet, welches erlaubt, den Volumenstrom des Abgases gezielt auf die zwei Abgasauslassöffnungen zu verteilen. Zur Verbesserung der Dichtwirkung sind in Endpositionen der Klappe sogenannte Dichtanschläge vorgesehen, welche das Durchströmen des Abgases in Endstellung der Drehklappe verhindern sollen.

Vor diesem Hintergrund bietet die Ausgestaltung von Abgaswegeventilen noch Raum für Verbesserungen.

Der vorliegenden Erfindung liegt dabei die Aufgabe zu Grunde, ein Abgaswegeventil der zuvor aufgezeigten Art dahingehend weiterzuentwickeln, dass neben dessen leichtgängigen Betrieb insbesondere die Dichtigkeit sowie zwischen den relativ zueinander beweglichen Teilen die damit zusammenhängende Akustik verbessert ist.

Die Lösung dieser Aufgabe besteht nach der Erfindung in einem Abgaswegeventil gemäß den Merkmalen von Patentanspruch 1.

Hiernach wird ein Abgaswegeventil zur umschaltbaren Weiterleitung eines Abgases aufgezeigt, welches ein Gehäuse mit einer Eingangsöffnung sowie wenigstens zwei Ausgangsöffnungen aufweist. Innerhalb des Gehäuses ist ein bewegliches Regelelement angeordnet, welches unter Ausbildung eines Kanals die Eingangsöffnung mit wenigstens einer der Ausgangsöffnungen verbindet. Hierbei verschließt das Regelelement die jeweils andere Ausgangsöffnung zumindest bereichsweise gegenüber der Eingangsöffnung. Erfindungsgemäß ist das Regelelement als in Form eines einseitig geschlossenen Hohlzylinders ausgebildet, welcher wenigstens eine Aussparung in seiner Mantelfläche aufweist. Dabei erstreckt sich der Kanal zwischen einem stirnseitig offenen Ende des Regelelements und der Aussparung.

Weiterhin weist das Regelelement mindestens zwei gegenüberliegende Rippen auf. Als gegenüberliegend ist im Sinne der Erfindung sowohl eine diametrale Anordnung als auch eine davon abweichende Ausgestaltung denkbar. Die Rippen sind bevorzugt als äußere Flügel ausgebildet, welche parallel zur Längsachse an der äußeren Mantelfläche des Regelelements angeordnet sind. Besonders bevorzugt erstrecken sich die Rippen dabei unter Eingliederung der Rückwand bis zu der Welle hin. Diese Ausgestaltung ermöglicht eine optimale Anpassung der durch die Rippen gebildeten Außenkontur des Regelelements an die Innenkontur des Gehäuses. Dabei sind die Rippen sowohl in ihrer Form als auch Lage möglichst nah an die Innenkontur des Gehäuses angenähert. Hierdurch kann sich eine möglichst große Dichtwirkung im Übergangsbereich zwischen Rippen und Gehäuseinnenwand einstellen. Auch wenn die Rippen bereits gegen die Innenwand des Gehäuses dichtende Mittel aufweisen kann, sind die Rippen bevorzugt so ausgebildet, dass diese bei Rotation des Regelelements innerhalb des Gehäuses berührungslos zur Innenfläche des Gehäuses ausgerichtet sind.

Auch wenn die Rippen an dem Regelelement innerhalb derselben Ebene ausgerichtet sein können, schließen diese bevorzugt einen Winkel von 90° bis 125° um die Längsachse herum zwischen sich ein. In diesem Zusammenhang weist das Gehäuse an seiner Innenwand wenigstens drei Leisten auf, welche mit den Rippen des Regelelements korrespondieren. So können die Leisten so ausgebildet sein, dass sie im fluchtenden Zustand mit den Rippen des Regelelements eine möglichst große Dichtwirkung zwischen sich entfalten. Bevorzugt sind die Rippen des Regelelements sowie die Leisten an der Innenwand des Gehäuses so aneinander angepasst, dass diese sich bei einer Rotation des Regelelements in Umfangsrichtung desselben und somit seitlich berühren. Hierfür ist erforderlich, dass die Rippen und die Leisten sich zumindest bereichsweise überlappen. Mit anderen Worten weist hierbei ein äußerer, die Rippen des Regelelements einschließender Hüllkreis einen gegenüber einem zwischen den Leisten im Inneren des Gehäuses befindlichen inneren Hüllkreis einen größeren Querschnitt auf.

Der besondere Vorteil besteht zunächst in der überaus günstigen Ausgestaltung des Regelelements in Form eines Hohlzylinders. Die sich bereits aufgrund der geschlossenen Form ergebende Festigkeit sowie Formstabilität bietet insbesondere gegenüber den vorherrschenden Randbedingungen diverse Verbesserungen. Allem voran wird ein deutlich besseres Dichtungsverhalten des Regelelements gegenüber der Eingangsöffnung und den Ausgangsöffnungen erreicht. Hierbei weist das Regelelement über seinen Umfang hinweg ein gleich bleibendes Verhalten, insbesondere Dehnungsverhalten, auf. Aufgrund der zu erreichenden Präzision der miteinander in Kontakt stehenden Bereiche sowie Bauteile erfüllen bereits die metallisch gedichteten Bereiche die Anforderungen an die Dichtigkeit bei Abgasanlagen.

Je nach Ausgestaltung kann das erfindungsgemäße Abgaswegeventil auch in AGR-Systemen eingesetzt werden.

Bevorzugt ist das Gehäuse zylindrisch ausgebildet. Auch hierbei besteht der Vorteil insbesondere darin, dass eine derartige Gehäuseform einen nur geringen thermischen unsymmetrischen Gehäuseverzug aufweist. Hierdurch kann die Dichtigkeit zwischen Gehäuse und Regelelement nochmals verbessert werden.

Eine dem stirnseitig offenen Ende des Regelelements gegenüberliegende Rückwand des Regelelements weist einen im Querschnitt bogenförmigen Verlauf auf. Die somit gekrümmte Rückwand des Regelelements dient der vorteilhaften Ausbildung des Kanals zwischen der Eingangsöffnung und wenigstens einer der Ausgangsöffnungen. Durch die gebogene Form kann das strömende Abgas optimal und mit möglichst wenig Verwirbelungen sowie nur geringem Staudruck durch das Abgaswegeventil hindurch geleitet werden. Überdies trägt auch die gebogene Form dazu bei, etwaige Spannungen innerhalb der Rückwand des Regelelements aufgrund fehlender Querschnitts- oder Verlaufsprünge gleichmäßig zu verteilen.

Vorteilhafte Weiterbildungen sind Gegenstand der abhängigen Patentansprüche 2 bis 9.

Bevorzugt erstreckt sich die Rückwand des Regelelements in einem trapezförmigen oder dreiecksförmigen Verlauf bis zum stirnseitig offenen Ende des Regelelements hin. Mit anderen Worten wird somit die hohlzylindrische Ausbildung des Regelelements zumindest bereichsweise zwischen seinen beiden Enden durch die bogenförmige Rückwand des Regelelements unterbrochen. Dabei kann die Rückwand selbst in einer Querrichtung zu ihrem bogenförmigen Verlauf geradlinig oder gebogen ausgebildet sein. Der besondere Vorteil der geradlinigen Ausbildung besteht darin, dass beispielsweise die Eingangsöffnung des Gehäuses einen runden, insbesondere kreisrunden Querschnitt aufweisen kann, demgegenüber die Ausgangsöffnungen einen eckigen Querschnitt besitzen. So ermöglicht der durch das Regelelement gebildete Kanal die optimale Verbindung des runden Querschnitts mit dem eckigen Querschnitt der jeweiligen Öffnungen.

Weiterhin kann das Regelelement eine Welle aufweisen, über welche das Regelelement innerhalb des Gehäuses gelagert ist. Bevorzugt ist die Welle dabei so an dem Regelelement angeordnet, dass das gesamte Regelelement lediglich eine einseitige Lagerung aufweist. Die einseitige Lagerung des Regelelements ermöglicht eine überaus kompakte Bauform des gesamten Abgaswegeventils.

Die Lagerung des Regelelements innerhalb des Gehäuses sieht eine rotatorische oder translatorische Bewegungsmöglichkeit des Regelelements vor. Mit anderen Worten kann zum Umschalten zwischen den jeweiligen Wegen für das Abgas durch das Abgaswegeventil hindurch eine Verschiebung des Regelelements oder dessen Rotation genutzt werden. Bevorzugt wird zum Umschalten des Abgaswegeventils eine rotatorische Bewegung des Regelelements genutzt.

Dabei ist vorgesehen, dass das Regelelement in einem Winkel von 0° bis 125° um eine Längsachse der Welle herum rotierbar ist. Insbesondere im Zusammenhang mit einer einzelnen Eingangsöffnung sowie zwei Ausgangsöffnungen kann es ausreichend sein, den Winkel auf einen Bereich von 0° bis 120° zu reduzieren. Selbstverständlich kann der Winkel auch größer als 125° sein, sofern die Anordnung sowie die Anzahl der Ausgangsöffnungen dies erfordern.

Bevorzugt ist die Welle des Regelelements innerhalb eines der Eingangsöffnung des Gehäuses gegenüberliegenden Lagers geführt, insbesondere abgestützt. Hierdurch ist das offene, stirnseitige Ende des als Hohlzylinder ausgebildeten Regelelements auf die ebenfalls vorteilhaft rund ausgebildete Eingangsöffnung des Gehäuses ausgerichtet. Bevorzugt liegen hierbei die Längsachse der Welle mit einer das Zentrum der Eingangsöffnung mit dem die Welle abstützenden Lager verbindenden Achse aufeinander. Somit kann das stirnseitig offene Ende des hohlzylindrischen Regelelements auch während seiner Rotation um die Längsachse der Welle herum mit der runden Kontur der Eingangsöffnung fluchten, so dass sich im Übergangsbereich zwischen der Eingangsöffnung des Gehäuses und dem weiteren Verlauf des Kanals durch das Regelelement hindurch keine unerwünschten Querschnittssprünge oder gar Querschnittsveränderungen während der Rotation des Regelelements einstellen. Darüber hinaus bietet eine solche Ausgestaltung Vorteile in Bezug auf die notwendige Dichtung im Übergangsbereich zwischen der Eingangsöffnung des Gehäuses und dem offenen, insbesondere stirnseitigen Ende des Regelelements.

Bevorzugt schließen zwei der an der Innenwand des Gehäuses angeordneten Leisten einen Winkel von 90° bis 125° um die Längsachse herum zwischen sich ein. Durch eine derartige Anordnung der Leisten im Inneren des Gehäuses wird die Rotation des Regelelements bereits auf einen Winkel von 0° bis 125° um die Längsachse herum begrenzt. Hierbei bilden die Leisten jeweils einen Anschlag für die Rippen des Regelelements. Bevorzugt sind die Leisten symmetrisch innerhalb des Gehäuses verteilt, so dass sie jeweils einen Winkel von 120° zwischen sich einschließen. Hierdurch kann die das Gehäuse zusätzlich aussteifende Wirkung der Leisten symmetrisch innerhalb des Gehäuses verteilt sein.

In vorteilhafter Weise weist das Regelelement an seinem offenen Ende einen umlaufenden Kragen auf. Der somit entstehende Ring um das stirnseitige offene Ende des hohlzylindrischen Regelelements herum verbessert dessen Aussteifung. Weiterhin ist vorgesehen, dass der Kragen dazu dient, das Regelelement im Bereich der Eingangsöffnung gegenüber dem Gehäuse zu dichten. Auch wenn die dichtende Wirkung des Kragens stirnseitig und somit parallel zur Längsachse gegen das Gehäuse erfolgen kann, wird diese bevorzugt radial eingestellt. So weist das Gehäuse bevorzugt im Bereich der Eingangsöffnungen einen runden Konturverlauf auf, gegen den der umlaufende Kragen des Regelelements radial dichtet.

Die Erfindung sieht vor, dass sich zwischen dem Gehäuse und der Rückwand des Regelelements im Bereich der Aussparung ein Spalt befindet. Durch diesen Spalt wird ein Zwischenraum zwischen dem Gehäuse und dem Regelelement mit dem Kanal verbunden. Der besondere Vorteil besteht hierbei darin, dass zwischen der Außenfläche des Regelelements und der Innenwand des Gehäuses ein sich zwischen den Rippen ausbildender Zwischenraum mit einem bestehenden Fluid gefüllt ist, welches als Isolator dient. Der Isolator dient dazu, das die heißen Abgase weiterleitende Regelelement von dem Gehäuse zu entkoppeln, so dass dieses geringeren thermischen Belastungen ausgesetzt ist. Überdies ermöglicht die gegenüber dem Regelelement weniger erwärmte Gehäuseaußenfläche einen näheren räumlichen Kontakt zu umliegenden, mitunter hitzeempfindlichen Bauteilen.

Die Erfindung zeigt die Ausgestaltung eines überaus kompakten Abgaswegeventils, welches bereits durch die zylindrische Bauweise des Gehäuses sowie des Regelelements einen nur geringen unsymmetrischen Verzug aufgrund der thermischen Belastungen aufweist. Insbesondere die einseitige Lagerung des Regelelements innerhalb des Gehäuses trägt zur kompakten Bauform bei. Vor allem die hohlzylindrische Ausbildung des Regelelements erfordert nur geringe Stellkräfte zum Umschalten des Abgaswegeventils, welche zusätzlich durch die optimierte Führung des Abgases durch das Abgaswegeventil hindurch erreicht werden. Maßgeblich hierfür ist die Ausgestaltung des durch das Abgaswegeventil hindurch führenden Kanals, welcher durch das Regelelement mit seiner bogenförmigen Rückwand gebildet ist. Hierbei findet die Umlenkung des Abgases im Bereich der gebogenen Rückwand des Regelelements statt, wodurch die Umlenkkräfte im Bereich der mit dem Regelelement verbundenen Welle aufgenommen werden. Da diese Umlenkkräfte nahezu axial in die Welle des Regelelements eingeleitet werden, ist dessen einseitige und insbesondere das Regelelement aus seiner normalen Lage auslenkende Belastung deutlich reduziert.

Weiterhin findet die Lagerung des Regelelements über seine Welle im Bereich des Zwischenraums zwischen dem Regelelement und dem Gehäuse statt, welches aufgrund des stehenden Fluids eine thermische Entkopplung durch dessen isolierende Wirkung der Lagerung bewirkt.

Die Erfindung wird nachfolgend anhand einiger in den Zeichnungen schematisch dargestellter Ausführungsbeispiele näher erläutert. Es zeigen:
- Figur 1: ein erfindungsgemäßes Abgaswegeventil in geschnittener Darstellungsweise;
- Figur 2: das Gehäuse des Abgasventils aus Figur 1 in derselben Darstellungsweise;
- Figur 3: eine auf ein inneres Bauteil reduzierte Darstellung des Abgaswegeventils aus Figur 1 ohne Gehäuse in derselben Darstellungsweise;
- Figur 4: das Bauteil aus Figur 3 in einer Seitenansicht;
- Figur 5: das innere Bauteil der Figuren 3 und 4 in einer perspektivischen Ansicht;
- Figur 6: das Gehäuse des Abgaswegeventils aus den Figuren 1 und 2 in einer Seitenansicht;
- Figur 7: das Gehäuse aus den Figuren 1, 2 und 6 in perspektivischer Darstellungsweise;
- Figur 8: das Gehäuse aus den Figuren 1, 2, 6 und 7 in einer Frontansicht sowie
- Figur 9: das innere Bauteil der Figuren 3 bis 5 in einer Rückansicht.

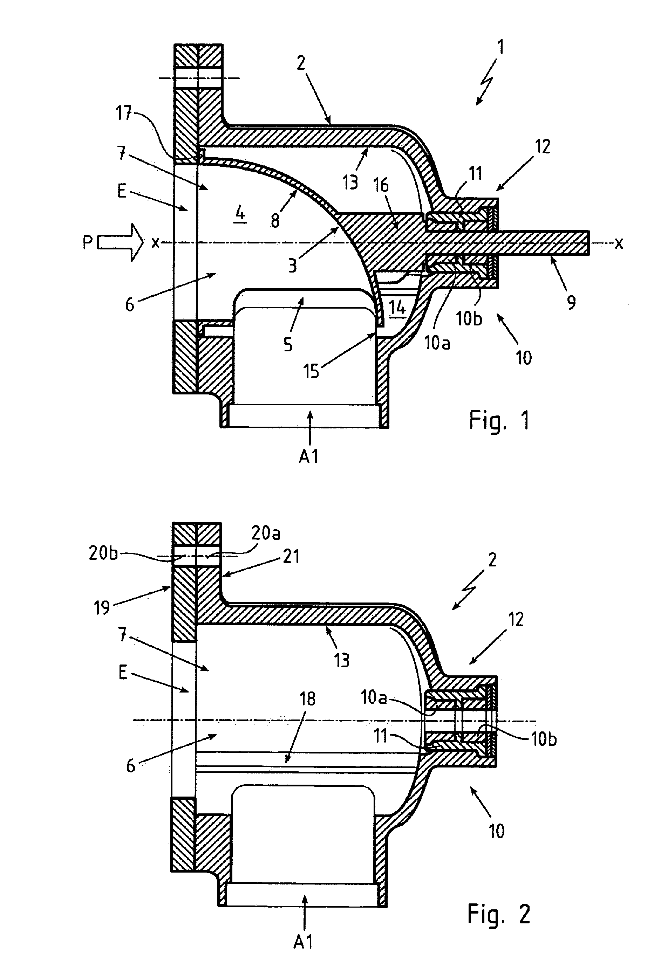

Figur 1 zeigt die geschnittene Darstellung durch ein erfindungsgemäßes Abgaswegeventil 1. Dieses umfasst zunächst ein überwiegend zylindrisch ausgestaltetes Gehäuse 2, innerhalb dem ein bewegliches Regelelement 3 angeordnet ist. Zur umschaltbaren Weiterleitung eines Abgases weist das Gehäuse ferner eine Eingangsöffnung E sowie wenigstens zwei Ausgangsöffnungen auf, von denen vorliegend aufgrund der Darstellung nur eine Ausgangsöffnung A1 dargestellt ist.

Durch das innerhalb des Gehäuses 2 angeordnete Regelelement 3 ist die Eingangsöffnung E mit wenigstens einer der Ausgangsöffnungen A1 unter Ausbildung eines Kanals 4 miteinander verbunden. Aufgrund der Bauform des Regelelements 3 sowie der Anordnung der Ausgangsöffnungen A1, A2 an dem Gehäuse 2 ist jeweils eine der Ausgangsöffnungen A1, A2 je nach Stellung des Regelelements 3 gegenüber der Eingangsöffnung E zumindest bereichsweise verschlossen.

Zur Ausbildung des Kanals 4 weist das Regelelement 3 eine zu jeweils einer der Ausgangsöffnungen A1, A2 weisende Aussparung 5 in seiner Mantelfläche 6 auf. Hierdurch erstreckt sich der Kanal 4 zwischen einem stirnseitigen, der Eingangsöffnung E zugewandten offenen Ende 7 des Regelelements 3 und der Aussparung 5.

Wie aus der Darstellung von Figur 1 ersichtlich, weist eine dem stirnseitig offenen Ende 7 des Regelelements 3 gegenüberliegende Rückwand 8 einen im Querschnitt bogenförmigen Verlauf auf. Weiterhin weist das Regelelement 3 eine Welle 9 auf, über welche das Regelelement 3 innerhalb des Gehäuses 2 gelagert ist. Hierfür ist die Welle 9 an einer dem Kanal 4 und somit der Eingangsöffnung E abgewandten Seite des Regelelements 3 angeordnet. Zur Aufnahme der Welle 9 ist ein entsprechendes Lager in dem Gehäuse 2 vorgesehen. Hierdurch ist die Welle 9 innerhalb des der Eingangsöffnung E des Gehäuses 2 gegenüberliegenden Lagers 10 geführt.

Das Lager 10 selbst weist vorliegend wenigstens zwei Lagereinheiten 10a, 10b auf, welche beispielsweise als nicht näher dargestellte Gleitlager, Kugellager oder Rollenlager ausgeführt sein können. Die jeweils einsetzbare Lagerung hängt insbesondere von den auftretenden thermischen Belastungen in diesem Bereich ab.

In der vorliegenden Ausführungsform ist vorgesehen, dass die beiden Lagereinheiten 10a, 10b innerhalb einer Buchse 11 angeordnet sind, welche in einem Stutzen 12 des Gehäuses 2 angeordnet ist. Sowohl die Welle 9 als auch die Buchse 11 zusammen mit dem Stutzen 12 sind auf einer gemeinsamen Längsachse x ausgerichtet. Die Längsachse x verläuft dabei durch ein Zentrum Z der Eingangsöffnung E.

Zwischen der gebogenen Rückwand 8 des Regelelements 3 und einer Innenwand 13 des Gehäuses 2 ist ein Zwischenraum 14 ausgebildet. Im Betrieb des Abgaswegeventils 1 ist der Zwischenraum 14 mit einem stehenden Fluid als Isolator gefüllt. Das Fluid kann dabei über einen Spalt 15 in den Zwischenraum 14 gelangen. Der Spalt 15 ist vorliegend zwischen dem Gehäuse 2 und dem Regelelement 3 ausgebildet. Näherhin ist der Spalt 15 vorliegend zwischen dem Gehäuse 2 und der Rückwand 8 des Regelelements 3 im Bereich der Aussparung 5 angeordnet. Bei dem Fluid handelt es sich bevorzugt um stehende Luft, insbesondere stehendes Abgas.

Im Bereich des Zwischenraums 14 weist die Welle 9 eine Verdickung 16 auf, welche sich zwischen der Buchse 11 des Lagers 10 und der gebogenen Rückwand 8 des Regelelements 3 erstreckt. Die Verdickung 16 dient dazu, dass Regelelement 3 in Richtung der Längsachse x gegen das Lager 10 abzustützen. Hierdurch können die im Betrieb des Abgaswegeventils 1 aufgrund der mit einem Pfeil P angedeuteten Richtung der Strömung des Abgases entstehenden Kräfte direkt in Richtung der Längsachse x in das Lager 10 und somit in das Gehäuse 2 im Bereich des Stutzens 12 geleitet werden.

Das Regelelement 3 weist ferner an seinem stirnseitig offenen Ende 7 einen umlaufenden Kragen 17 auf. Der Kragen 17 dient dazu, das Regelelement 3 im Bereich der Eingangsöffnung E gegenüber dem Gehäuse 2 zu dichten. Hierfür ist der Kragen 17 in seinen sich quer zur Längsachse x erstreckenden Ausdehnung möglichst nah an die Innenwand 13 des Gehäuses 2 angenähert.

Figur 2 zeigt das bereits in Figur 1 dargestellte Gehäuse 2 ohne das Regelelement 3. In dieser Ansicht wird deutlich, dass das Gehäuse 2 in seinem Inneren eine Leiste 18 aufweist, welche sich parallel zur Längsachse x entlang der Innenwand 13 des Gehäuses 2 erstreckt.

Wie bereits in Figur 1 dargestellt, ist auch vorliegend in Figur 2 das Gehäuse 2 in einem gekoppelten Zustand mit einem Flansch 19 dargestellt. Der Flansch 19 ist dabei mit einem nicht näher dargestellten Bauteil, beispielsweise eines Abgassystems, verbunden. Zur Festlegung des Gehäuses 2 sowie des Flansches 19 ist wenigstens eine Durchgangsöffnung 20a in einem im Bereich der Eingangsöffnung e angeordneten Kragen 21 vorgesehen, welche mit einer weiteren im Flansch 19 angeordneten Durchgangsöffnung 20b fluchtet. Hierdurch kann das Gehäuse 2 sowie der Flansch 19 über ein nicht näher dargestelltes lösbares Verbindungsmittel angebunden werden.

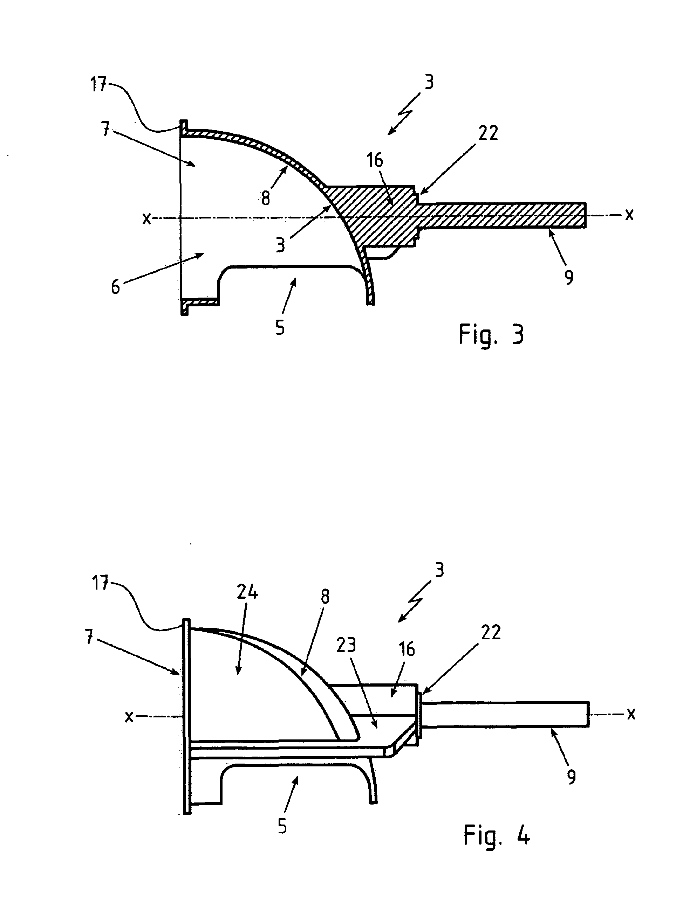

Figur 3 zeigt das aus dem Gehäuse 2 extrahierte Regelelement 3 aus Figur 1. Wie zu erkennen, ist die Welle 9 im Bereich der Verdickung 16 mit einem Absatz 22 versehen, welcher im zusammengebauten Zustand des Regelelements 3 mit dem hier nicht näher dargestellten Gehäuse 2 zum Lager 10 hin ausgerichtet ist. Der Absatz 22 dient dazu, einen geeigneten Ansatz an die dem Zwischenraum 14 des Gehäuses 2 zugewandte Lagereinheit 10a zu bilden.

Figur 4 zeigt das bereits aus den Figuren 1 und 3 hervorgehende Regelelement 3 in einer Seitenansicht. Wie zu erkennen, besitzt das Regelelement 3 wenigstens eine Rippe 23a, welche parallel zur Längsachse x an der äußeren Mantelfläche 24 des Regelelements 3 angeordnet ist. Dabei erstreckt sich die Rippe 23a unter Eingliederung der gebogenen Rückwand 8 des Regelelements 3 bis zu der Welle 9, näherhin deren Verdickung 16 hin.

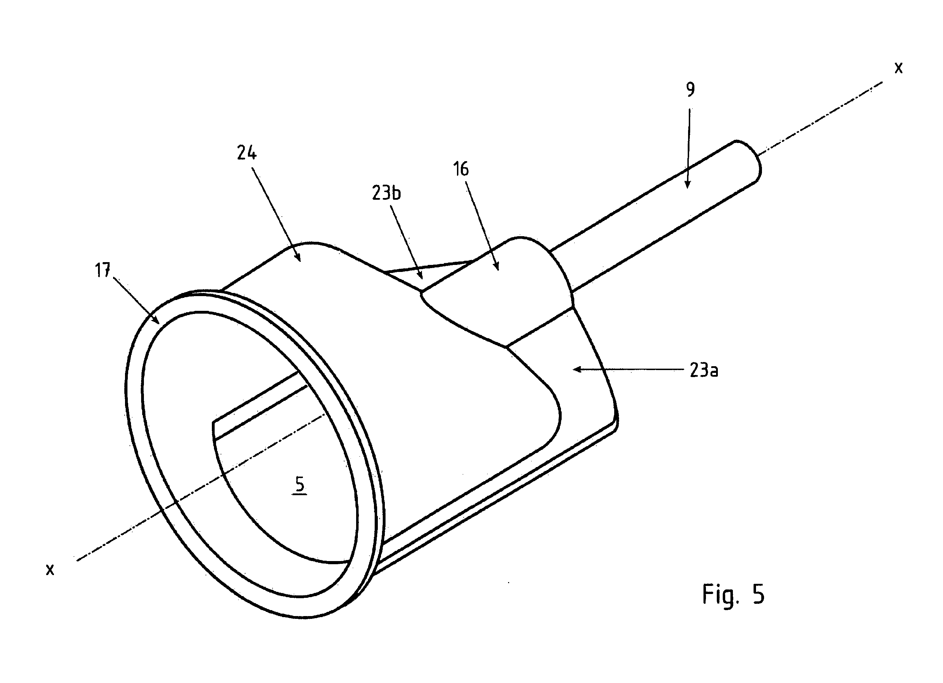

Figur 5 zeigt das in Figur 4 dargestellte Regelelement 3 in einer perspektivischen Ansicht. Hierbei ist ersichtlich, dass die Rippe 23a durch eine weitere Rippe 23b ergänzt ist. Somit ist das Regelelement 3 in Bezug auf seine äußere Mantelfläche 24 zumindest bereichsweise von den Rippen 23a, 23b umschlossen, welche zur Verdickung 16 der Welle 9 hin verlaufen.

In dieser Ansicht wird deutlich, dass das Regelelement 3 als einseitig geschlossener Hohlzylinder ausgebildet ist.

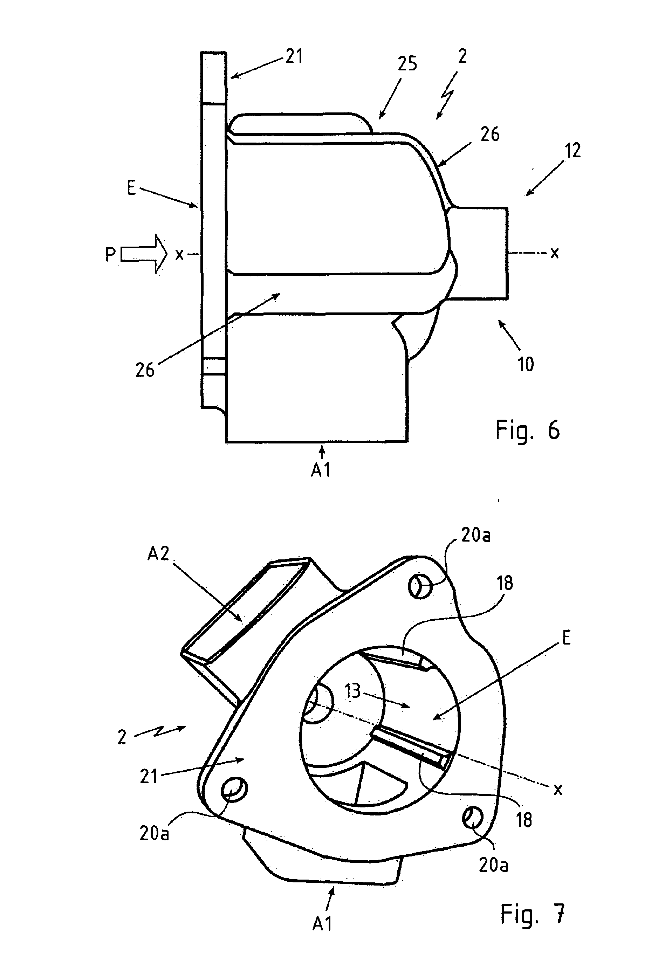

Figur 6 zeigt nochmals das Gehäuse des Abgaswegeventils 1 in einer Seitenansicht. Wie zu erkennen, weist dieses an seiner Außenseite 25 angeordnete Erhebungen 26 auf. Die Erhebungen 26 erstrecken sich in Richtung der Längsachse X vom Kragen 21 des Gehäuses 2 bis zu dessen dem Kragen 21 gegenüberliegenden Stutzen 12. Die Erhebungen 26 sind in nicht näher dargestellter Weise im Bereich der im Inneren des Gehäuses 2 angeordneten Leiste 18 angelegt. Die Erhebungen 26 sind dabei in vorteilhafter Weise in ihrer Querschnittsdicke größer als die Leiste 18 ausgeführt, was insbesondere in Bezug auf die Fertigung entsprechende Vorteile mit sich bringt. So kann die hier nicht näher dargestellte Leiste 18 beispielsweise wenigstens einen einseitigen und sich in Richtung der Längsachse X erstreckenden Freistich aufweisen, um eine durchgehend plane Auflagefläche für die hier ebenfalls nicht näher dargestellten Rippen 23a, 23b des Regelelements 3 zu erhalten.

Figur 7 zeigt das Gehäuse 2 nochmals in einer perspektivischen Darstellungsweise. Hierbei wird der Blick durch die Eingangsöffnung E in das Innere des Gehäuses 2 freigegeben. Wie zu erkennen, sind die Leisten 18 an der Innenwand 13 des Gehäuses 2 in einem Abstand zueinander angeordnet. Weiterhin wird hierbei auch die zweite Ausgangsöffnung A2 erkennbar.

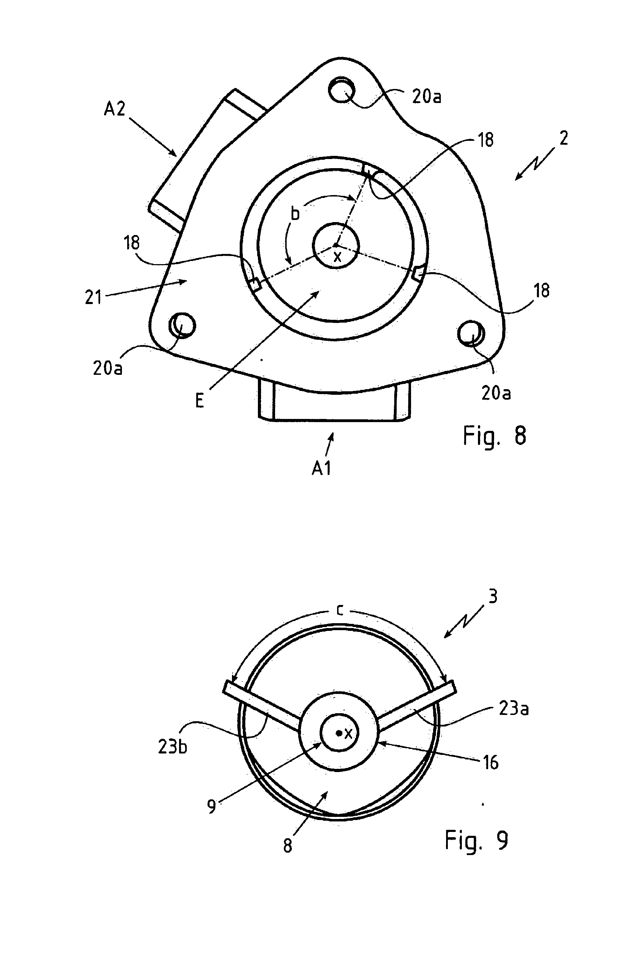

Figur 8 verdeutlicht die Anordnungen der Leisten 18 im Inneren des Gehäuses 2 in dessen Frontansicht. Wie zu erkennen, weist das Gehäuse 2 in seinem Inneren wenigstens drei Leisten 18 auf, welche im komplettierten Zustand des Gehäuses 2 mit dem hier nicht näher dargestellten Regelelement 3 und dessen Rippen 23a, 23b korrespondieren. Vorzugsweise schließen zwei der Leisten 18 einen Winkel b von 90° bis 125° um die Längsachse x herum zwischen sich ein.

Figur 9 zeigt nochmals das Regelelement 3 aus den Figuren 3 und 4 in einer Rückansicht. Mit Blick auf die Welle 9 sowie auf deren Verdickung 16 ist erkennbar, dass die beiden Rippen 23a, 23b nicht in derselben Ebene verlaufen. Vorzugsweise schließen die Rippen 23a, 23b einen Winkel c von 90° bis 125° um die Längsachse x herum zwischen sich ein.

Durch die Anordnung der Leisten 18 im Inneren des Gehäuses 2 sowie die Anordnung der Rippen 23a, 23b an der äußeren Mantelfläche 24 des Regelelements 3 ist dieses im komplettierten Zustand des Abgaswegeventils 1 in einem Winkel von 0° bis 125° um die Längsachse x herum rotierbar.

Weiterhin ist erkennbar, dass die gebogene Rückwand 8 des Regelelements 3 sich in einem trapezförmigen oder dreiecksförmigen Verlauf bis zum hier nicht näher dargestellten stirnseitig offenen Ende 7 des Regelelements 3 erstreckt.

### Bezugszeichen:

- 1: - Abgaswegeventil
- 2: - Gehäuse v. 1
- 3: - Regelelement in 2
- 4: - Kanal
- 5: - Aussparung in 3
- 6: - Mantelfläche v. 3
- 7: - stirnseitig offenes Ende v. 3
- 8: - Rückwand v. 3
- 9: - Welle v. 3
- 10: - Lager in 12
- 10a: - Lagereinheit v. 10
- 10b: - Lagereinheit v. 10
- 11: - Buchse in 12
- 12: - Stutzen v. 2
- 13: - Innenwand v. 2
- 14: - Zwischenraum
- 15: - Spalt zwischen 2 und 3
- 16: - Verdickung v. 9
- 17: - Kragen v. 3
- 18: - Leiste an 13
- 19: - Flansch
- 20a: - Durchgangsöffnung in 21
- 20b: - Durchgangsöffnung in 19
- 21: - Kragen v. 2
- 22: - Absatz zw. 9 und 16
- 23a: - Rippe v. 3
- 23b: - Rippe v. 3
- 24: - äußere Mantelfläche v. 3
- 25: - Außenseite v. 2
- 26: - Erhebung an 25
- A1: - Ausgangsöffnung in 2
- A2: - Ausgangsöffnung in 2
- b: - Winkel zw. 18
- c: - Winkel zw. 23a, 23b
- E: - Eingangsöffnung in 2
- x: - Längsachse

## Patentansprüche

1. Abgaswegeventil zur umschaltbaren Durchleitung eines Abgases, umfassend ein Gehäuse (2), welches eine Eingangsöffnung (E) sowie wenigstens zwei Ausgangsöffnungen (A1, A2) aufweist, wobei innerhalb des Gehäuses (2) ein bewegliches Regelelement (3) angeordnet ist, welches unter Ausbildung eines Kanals (4) die Eingangsöffnung (E) mit wenigstens einer der Ausgangsöffnungen (A1, A2) verbindet und dabei die jeweils andere Ausgangsöffnung (A1, A2) gegenüber der Eingangsöffnung (E) zumindest bereichsweise verschließt, wobei das Regelelement (3) in Form eines einseitig geschlossenen Hohlzylinders ausgebildet ist, welcher eine Aussparung (5) in seiner Mantelfläche (6) besitzt sowie eine seinem stirnseitig offenen Ende (7) gegenüberliegende Rückwand (8) mit einem im Querschnitt bogenförmigen Verlauf aufweist, wobei sich der Kanal (4) zwischen dem offenen Ende (7) des Regelelements (3) und der Aussparung (5) erstreckt, **dadurch gekennzeichnet, dass** das Regelelement (3) mindestens zwei Rippen (23a, 23b) aufweist, welche an der äußeren Mantelfläche (6) des Regelelements (3) angeordnet sind, wobei die Rippen (23a, 23b) sich unter Eingliederung der Rückwand (8) bis zu der Welle (9) hin erstrecken, wobei das Gehäuse (2) an seiner Innenwand (13) wenigstens drei Leisten (18) aufweist, welche mit den Rippen (23a, 23b) korrespondieren.

2. Abgaswegeventil nach Anspruch 1, **dadurch gekennzeichnet, dass** die Rückwand (8) sich in einem trapezförmigen oder dreiecksförmigen Verlauf bis zum offen Ende (7) des Regelelements (3) erstreckt.

3. Abgaswegeventil nach einem der Ansprüche 1 oder 2, **dadurch gekennzeichnet, dass** das Regelelement (3) eine Welle (9) aufweist, über welche das Regelelement (3) innerhalb des Gehäuses (2) gelagert ist.

4. Abgaswegeventil nach Anspruch 3, **dadurch gekennzeichnet, dass** das Regelelement (3) in einem Winkel von 0° bis 125° um eine Längsachse (x) der Welle (9) herum rotierbar ist.

5. Abgaswegeventil nach Anspruch 3 oder 4, **dadurch gekennzeichnet, dass** die Welle (9) innerhalb eines der Eingangsöffnung (E) des Gehäuses (2) gegenüberliegenden Lagers (10) abgestützt ist.

6. Abgaswegeventil nach einem der Ansprüche 1 bis 5 , **dadurch gekennzeichnet, dass** die Rippen (23a, 23b) sich parallel zur Längsachse (x) erstrecken und einen Winkel (c) von 90° bis 125° um die Längsachse (x) herum zwischen sich einschließen.

7. Abgaswegeventil nach einem der Ansprüche 1 bis 6, **dadurch gekennzeichnet, dass** zwei der Leisten (18) einen Winkel (b) von 90° bis 125° um die Längsachse (x) herum zwischen sich einschließen.

8. Abgaswegeventil nach einem der Ansprüche 1 bis 7, **dadurch gekennzeichnet, dass** das Regelelement (3) an seinem offenen Ende (7) einen umlaufenden Kragen (17) aufweist, welcher das Regelelement (3) im Bereich der Eingangsöffnung (E) gegenüber dem Gehäuse (2) dichtet.

9. Abgaswegeventil nach einem der Ansprüche 1 bis 8, **dadurch gekennzeichnet, dass** sich zwischen dem Gehäuse (2) und der Rückwand (8) im Bereich der Aussparung (5) ein Spalt (15) befindet, welcher einen Zwischenraum (14) zwischen dem Gehäuse (2) und dem Regelelement (3) mit dem Kanal (4) verbindet.

## Claims

1. Directional exhaust valve for switchably conducting an exhaust gas, comprising a housing (2) having an inlet port (E) and at least two outlet ports (A1, A2), a control element (3) being arranged movably within the housing (2), which control element connects the inlet port (E) to at least one of the outlet ports (A1, A2) by forming a duct (4) and, in the process, closes off, at least in some regions, the other outlet port (A1, A2) from the inlet port (E), said control element (3) being designed in the form of a hollow cylinder which is closed at one end and has an opening (5) in its outer casing (6), and comprising a rear wall (8) opposite its end (7) which is open at the end face, said rear wall having an arcuate cross section, said duct (4) extending between the open end (7) of the control element (3) and the opening (5), **characterised in that** the control element (3) has at least two ribs (23a, 23b) arranged on the outer casing (6) of the control element (3), said ribs (23a, 23b) extending as far as the shaft (9) and incorporating the rear wall (8), the housing (2) comprising at least three rails (18) on its inner wall (13) which correspond to the ribs (23a, 23b).

2. Directional exhaust valve according to claim 1, **characterised in that** the rear wall (8) extends as far as the open end (7) of the control element (3) in a trapezoidal or triangular course.

3. Directional exhaust valve according to either claim 1 or claim 2, **characterised in that** the control element (3) has a shaft (9) which supports the control element (3) within the housing (2).

4. Directional exhaust valve according to claim 3, **characterised in that** the control element (3) is rotatable about a longitudinal axis (x) of the shaft (9) by an angle of from 0° to 125°.

5. Directional exhaust valve according to either claim 3 or claim 4, **characterised in that** the shaft (9) is supported within a bearing (10) arranged opposite the inlet port (E) of the housing (2).

6. Directional exhaust valve according to any of claims 1 to 5, **characterised in that** the ribs (23a, 23b) extend in parallel with the longitudinal axis (x) and enclose between the man angle (c) of from 90° to 125°about the longitudinal axis (x).

7. Directional exhaust valve according to any of claims1 to 6, **characterised in that** two of the rails (18) enclose between them an angle (b) of from 90° to 125° about the longitudinal axis (x).

8. Directional exhaust valve according to any of claims 1 to 7, **characterised in that** the control element (3) comprises, at its open end (7), a circumferential collar (17) which seals the control element (3) in the region of the inlet port (E) with respect to the housing (2).

9. Directional exhaust valve according to any of claims 1 to 8, **characterised in that** there is a gap (15) between the housing (2) and the rear wall (8) in the region of the opening (5), which gap connects an intermediate space (14) between the housing (2) and the control element (3) to the duct (4).

## Revendications

1. Distributeur de gaz d'échappement pour le passage commutable d'un gaz d'échappement, comprenant un carter (2) qui comporte une ouverture d'entrée (E) ainsi qu'au moins deux ouvertures de sortie (A1, A2),
un élément de régulation (3) mobile étant agencé à l'intérieur du carter (2), lequel élément de régulation relie l'ouverture d'entrée (E) à au moins l'une des ouvertures de sortie (A1, A2) en formant un canal (4) et ferme alors au moins partiellement l'autre ouverture de sortie respective (A1, A2) par rapport à l'ouverture d'entrée (E),
l'élément de régulation (3) étant conçu sous la forme d'un cylindre creux et fermé d'un côté qui a un évidement (5) dans sa surface latérale (6) et qui comporte une paroi arrière (8) placée à l'opposé de son extrémité ouverte frontalement (7), laquelle paroi arrière a une allure dont la section transversale est en forme d'arc,
le canal (4) s'étendant entre l'extrémité ouverte (7) de l'élément de régulation (3) et l'évidement (5),
**caractérisé en ce que** l'élément de régulation (3) comporte au moins deux nervures (23a, 23b) qui sont agencées sur la surface latérale extérieure (6) de l'élément de régulation (3), les nervures (23a, 23b) s'étendant jusqu'à l'arbre (9) en intégrant la paroi arrière (8), le carter (2) comportant sur sa paroi intérieure (13) au moins trois baguettes (18) qui correspondent aux nervures (23a, 23b).

2. Distributeur de gaz d'échappement selon la revendication 1, **caractérisé en ce que** la paroi arrière (8) s'étend selon une allure trapézoïdale ou triangulaire jusqu'à l'extrémité ouverte (7) de l'élément de régulation (3).

3. Distributeur de gaz d'échappement selon l'une des revendications 1 ou 2, **caractérisé en ce que** l'élément de régulation (3) comporte un arbre (9) par l'intermédiaire duquel l'élément de régulation (3) est logé à l'intérieur du carter (2).

4. Distributeur de gaz d'échappement selon la revendication 3, **caractérisé en ce que** l'élément de régulation (3) peut tourner sur un angle de 0° à 125° autour d'un axe longitudinal (x) de l'arbre (9).

5. Distributeur de gaz d'échappement selon la revendication 3 ou 4, **caractérisé en ce que** l'arbre (9) est supporté à l'intérieur d'un palier (10) situé à l'opposé de l'ouverture d'entrée (E) du carter (2).

6. Distributeur de gaz d'échappement selon l'une des revendications 1 à 5, **caractérisé en ce que** les nervures (23a, 23b) s'étendent parallèlement à l'axe longitudinal (x) et forment entre elles un angle (c) compris entre 90° et 125° autour de l'axe longitudinal (x).

7. Distributeur de gaz d'échappement selon l'une des revendications 1 à 6, **caractérisé en ce que** deux des baguettes (18) forment entre elles un angle (b) compris entre 90° et 125° autour de l'axe longitudinal (x).

8. Distributeur de gaz d'échappement selon l'une des revendications 1 à 7, **caractérisé en ce que** l'élément de régulation (3) comporte à son extrémité ouverte (7) un collet (17) qui étanchéifie l'élément de régulation (3) par rapport au carter (2) dans la zone de l'ouverture d'entrée (E).

9. Distributeur de gaz d'échappement selon l'une des revendications 1 à 8, **caractérisé en ce qu'**il y a une fente (15) entre le carter (2) et la paroi arrière (8) dans la zone de l'évidement (5), laquelle fente relie au canal (4) un espace intermédiaire (14) entre le carter (2) et l'élément de régulation (3).
